(19) Europäisches Patentamt / European Patent Office / Office européen des brevets

(11) **EP 1 752 516 A1**

(12) **EUROPEAN PATENT APPLICATION**

(43) Date of publication:
   **14.02.2007 Bulletin 2007/07**

(51) Int Cl.:
   ***C10M 133/56*** *(2006.01)*   ***C10M 149/14*** *(2006.01)*
   ***C10L 1/22*** *(2006.01)*   ***C10L 10/18*** *(2006.01)*
   *C10N 30/04* *(2006.01)*   *C10N 40/25* *(2006.01)*

(21) Application number: **06118211.9**

(22) Date of filing: **31.07.2006**

(84) Designated Contracting States:
   **AT BE BG CH CY CZ DE DK EE ES FI FR GB GR HU IE IS IT LI LT LU LV MC NL PL PT RO SE SI SK TR**
   Designated Extension States:
   **AL BA HR MK YU**

(30) Priority: **01.08.2005 US 704301 P**

(71) Applicant: **The Lubrizol Corporation**
   **Wickliffe OH 44092-2298 (US)**

(72) Inventors:
   • **Friend, Christopher**
   **Belper, Derby DE56 1QN (GB)**
   • **Davies, Mark**
   **Belper, Derby DE56 1QN (GB)**
   • **Hollingshurst, Claire**
   **Belper, Derby DE56 1QN (GB)**
   • **Cressey, David**
   **Belper, Derby DE56 1QN (GB)**

(74) Representative: **Weber, Thomas**
   **von Kreisler Selting Werner,**
   **Bahnhofsvorplatz 1,**
   **Deichmannhaus am Dom,**
   **50667 Köln (DE)**

(54) **Dispersants**

(57) The present invention provides a composition comprising: (a) a hydrocarbon fluid; and (b) a dispersant/detergent comprising the structure of Formula (1): $(E)_p$-Z Formula (1), wherein Z is a residue of a polyamine or polyimine; E is (i) a residue of a polyester having a free carboxylic acid group, or (ii) a residue of a hydrocarbyl-substituted acylating agent, with the proviso that if E is the hydrocarbyl-substituted acylating agent, Z is a polyimine, and wherein when E is the hydrocarbyl-substituted acylating agent, the composition has a phosphorus content of 0 ppm to 650 ppm. The invention further provides a use for the composition.

EP 1 752 516 A1

**Description**

TECHNICAL FIELD

The present invention relates to a composition containing novel dispersants. The invention further relates a process for the preparation of the dispersants and their use in various applications including in an oil of lubricating viscosity, liquid fuel or in oil-field applications.

BACKGROUND OF THE INVENTION

The use of dispersants in a wide variety of lubricants, fuels and oil field applications is known. Many of the known dispersants are based on polyisobutylene succinimides derived from polyalkyleneamines (also known as HPAX™). Typically the dispersants are useful for soot or sludge control in fuels or lubricants. In oil field applications, the dispersants are useful for asphaltene control.

However, many of the dispersants are not appropriate in several applications and there are technical difficulties making the succinimide dispersants because known processes employ aromatic solvent/diluent systems that have low flash points. The low flash points typically result in the dispersants being made by processes that may not be as efficient and/or having increased flammability risks. This restricts possible processes to prepare succinimide dispersants. Examples of such systems are taught in International Publication WO 98/12282 A1, U.S. Patent Numbers 5,279,626; 3,658,494; and 6,408,812. In principle higher aromatic compounds with higher flash points may be used. However, many of these aromatic compounds have toxicity issues such as carcinogenicity.

Other dispersant systems contemplated include those disclosed in International Publication WO 04/090080 and British patent GB 1,506,786.

British patent GB 1,506,786 discloses an oil composition containing a dispersant which is the reaction product of an alk(en)yl succinic acid or anhydride with an alkylene imine. The dispersant is prepared in a non-polar solvent including xylene, toluene, benzene and hexane.

US Patent 4,938,885 disccloses an antioxidant dispersant polymer dendrimer derived from succinimide poly (amidoamine) dendrimers.

US Patent 6,228,978 discloses lubricant compositions containing a dispersant derived from reacting a polyolefin with a diaminoalkane with acrylonitrile.

International Publication WO 04/090080 discloses a method of preparing a fuel emulsion containing a hydrocarbon fuel, a fuel-soluble surfactant with a hydrocarbyl substituent of number average molecular of at least 590 and a hydrophilic moiety having acidic or basic functionality. The emulsion further comprises an aqueous phase complementary to the hydrophilic moiety. A suitable surfactant includes the reaction product of 12-hydroxystearic acid with a polyethyleneimine.

In some applications, for example, in an internal combustion engine, many of the conventional succinimide dispersants, whilst providing soot and/or sludge control, are believed to be detrimental to fuel efficiency and/or seal compatability. Furthermore it would be useful if a dispersant/detergent additive could provide dispersant properties in lubricants with various levels of sulphated ash, phosphorus and sulphur content.

Therefore it would be advantageous to have a dispersant/detergent additive capable of providing improved fuel economy and/or seal compatability. Improving fuel economy will help to reduce effect of sulphur and/or phosphorus moieties, $NO_x$ and particulate emissions. Further, as sulphur and/or phosphorus moieties (known to poison $NO_x$ catalysts or other after-treatment devices) are reduced, the performance of said catalysts increases due to less poisoning.

The present invention overcomes at least one of the difficulties highlighted in the prior art.

SUMMARY OF THE INVENTION

The present invention provides a composition comprising:

(a) a hydrocarbon fluid; and
(b) a dispersant/detergent comprising the structure of Formula (1):

$$(E)_p\text{-}Z \qquad \text{Formula (1)}$$

wherein
Z is a residue of a polyamine or polyimine;
E is (i) a residue of a polyester having a free carboxylic acid group, or

(ii) a residue of a hydrocarbyl-substituted acylating agent,

with the proviso that if E is the residue of the hydrocarbyl-substituted acylating agent, Z is a polyimine and the composition has a phosphorus content of 0 ppm to 650 ppm; and
p is at least one, typically with upper limits of 2000 or 1000.

In one embodiment the present invention provides a composition comprising:

(a) a hydrocarbon fluid; and
(b) a dispersant/detergent comprising the structure of Formula (1):

$$(E)_p\text{-}Z \qquad \text{Formula (1)}$$

wherein
Z is a residue of a polyamine or polyimine;
E is

(i) a residue of formula $((T\text{-}(O\text{-}A\text{-}CO)_n (O\text{-}B\text{-}CO)_m))\text{-}$, or
(ii) a residue of a hydrocarbyl-substituted acylating agent;

T is H or a polymerisation terminating group;
A is C2-C40, or C8-C30 or C16-C20 alkenylene or mixtures thereof;
B is C2-C40, or C8-C30 or C10-C20 or C10-C16 alkylene or mixtures thereof;
n is 0 to 50 or 2 to 50;
m is 0 to 25 or 1 to 25, provided the sum of m+n is 1 or more; and
p is at least 1, typically with upper limits of 2000 or 1000,
with the proviso that if E is the residue of formula $((T\text{-}(O\text{-}A\text{-}CO)_n (O\text{-}B\text{-}CO)_m))\text{-}$, p is at least 2; and if E is the hydrocarbyl-substituted acylating agent, Z is a polyimine and the composition has a phosphorus content of 0 ppm to 650 ppm.

The invention further provides the composition as described above wherein the hydrocarbon fluid is a liquid fuel (including gasoline, diesel). The invention further provides the composition as described above wherein the hydrocarbon fluid is an oil of lubricating viscosity.

The invention further provides a method for lubricating or fuelling an internal combustion engine.

In another embodiment the invention provides a method of asphaltene control in an unrefined or partially refined heterogeneous fluid, the method employing said dispersant of Formula (1).

The invention further provides an additive capable of imparting at least one of detergent/dispersant activity, fuel economy activity and seal compatability.

DETAILED DESCRIPTION OF THE INVENTION

The present invention provides a compositions as defined above.

The dispersants defined by Formula (1) may have a total base number (TBN) of at least 2, or at least 10, or in ranges from 5 to 90, 70 to 400, or 80 to 350, or 100 to 300 mg KOH/g.

In one embodiment the composition comprises:

(a) a hydrocarbon fluid; and
(b) a dispersant/detergent comprising the structure of Formula (1):

$$(E)_p\text{-}Z \qquad \text{Formula (1)}$$

wherein
Z is a residue of a polyamine or polyimine;
E is the residue of formula $((T\text{-}(O\text{-}A\text{-}CO)_n (O\text{-}B\text{-}CO)_m))\text{-}$;
T is H or a polymerisation terminating group;
A is C2-C40, or C8-C30 or C16-C20 alkenylene or mixtures thereof;
B is C2-C40, or C8-C30 or C10-C20 or C10-C16 alkylene or mixtures thereof;
n is 0 to 50 or 1 to 50 or 2 to 50;
m is 0 to 50 or 1 to 25, provided the sum of m+n is 1 or more; and
p is at least 2, typically with upper limits of 2000 or 1000.

In one embodiment the dispersant of Formula (1) has E defined as the residue of formula $((T\text{-}(O\text{-}A\text{-}CO)_n (O\text{-}$

B-CO)$_m$))-; and Z is the residue of a polyimine.

In one embodiment the dispersant of Formula (1) has E defined as the residue of formula ((T-(O-A-CO)$_n$ (O-B-CO)$_m$))-; and Z is the residue of a polyamine.

When E is the residue of formula ((T-(O-A-CO)$_n$ (O-B-CO)$_m$))- the weight ratio of ((T-(O-A-CO)$_n$ (O-B-CO)$_m$))- to Z may be 2:1 to 80:1 or 4:1 to 60:1 or 8:1 to 30:1 or 8:1 to 20:1.

The residue of formula ((T-(O-A-CO)$_n$ (O-B-CO)$_m$))- may be a homopolymer or a random or block copolymer. In one embodiment the residue is in the form of a random copolymer.

In several embodiments the sum of m+n is less than 15, or less than 10, for example 5, 6, 7, or 8.

In one embodiment the composition comprises:

(a) a hydrocarbon fluid; and
(b) a dispersant/detergent comprising the structure of Formula (1):

$$(E)_p\text{-}Z$$

$$\text{Formula (1)}$$

wherein

Z is a residue of a polyimine;

E is a hydrocarbyl-substituted acylating agent; and

p is at least 1,

wherein the composition has a phosphorus content of 0 ppm to 650 ppm; and the composition has a sulphur content of 0.5 wt % or less.

Hydrocarbyl-Substituted Acylating Agent

The hydrocarbyl group of the hydrocarbyl-substituted acylating agent generally contains an average of at least 8, or 30, or 35 up to 350, or to 200, or to 100 carbon atoms. In one embodiment, the hydrocarbyl group is derived from a polyalkene characterised by an $\bar{M}_n$ (number average molecular weight) of at least 500. Generally, the polyalkene is characterised by a $\bar{M}_n$ of 500, or 700, or 750, or even 900 or up to 5000. Examples of suitable ranges for the $\bar{M}_n$ of polyalkene include 500 to 3000, or to 5000, 750 to 3000 or 900 to 2500. Specific polyalkene may have a $\bar{M}_n$ of 550, 750, 950-1000, 1500, or 2300. Polyolefins which may form the hydrocarbyl substituent may be prepared by polymerising olefin monomers by well known polymerisation methods, as described above, and are also commercially available. The olefin monomers include monoolefins, including monoolefins having 2 to 10 carbon atoms such as ethylene, propylene, 1-butene, isobutylene, and 1-decene. An especially useful monoolefin source is a $C_4$ refinery stream having a 35 to 75 weight percent butene content and a 30 to 60 weight percent isobutene content. Useful olefin monomers also include diolefins such as isoprene and 1,3-butadiene. Olefin monomers may also include mixtures of two or more monoolefins, of two or more diolefins, or of one or more monoolefins and one or more diolefins. Useful polyolefins include polyisobutylenes having a number average molecular weight of 140 to 5000, in another instance of 400 to 2500, and in a further instance of 140 or 500 to 1500. The polyisobutylene may have a vinylidene double bond content of 5 to 69%, in a second instance of 50 to 69%, and in a third instance of 50 to 95% or 70 to 90%. The polyolefin may be a homopolymer prepared from a single olefin monomer or a copolymer prepared from a mixture of two or more olefin monomers. Also possible as the hydrocarbyl substituent source are mixtures of two or more homopolymers, two or more copolymers, or one or more homopolymers and one or more copolymers.

The acylating agent may be an alpha, beta-unsaturated mono- or polycarboxylic acid or derivative thereof, to include anhydrides and esters. Examples of acylating agents include, for example, acrylic acid, methyl acrylate, methacrylic acid, maleic acid or anhydride, fumaric acid, and itaconic acid or anhydride. In one embodiment the hydrocarbyl-substituted acylating agent comprises a polyisobutylene succinic anhydride.

Polyimine and Polyamine

When Z is the residue of a polyimine or mixtures thereof, the polyimine may be a polyalkyleneimine (PAI), such as poly ($C_{2-6}$-alkyleneimine). Specific examples include polyethyleneimine (often referred to as PEI; and commonly prepared by acid catalysed ring opening of aziridine) or polypropyleneimine. The polyimine may be linear or branched. In one embodiment the polyimine is branched. Linear polyethyleneimine may be prepared by the hydrolysis of poly(N-acyl) alkyleneimines as described, for example, by Takeo Saegusa et al. in Macromolecules, 1972, Vol 5, page 4470. Branched polyethyleneimines of differing molecular weight are commercially available from BASF and Nippon Shokubai.

Polypropyleneimine dendrimers are commercially available from DSM Fine Chemicals.

The number average molecular weight of the polyimine may range from 300 to 650,000, 350 or 500 to 600,000, 600 to 100,000, 1200 to 70,000 or 2000 to 20,000. In the case of polyethyleneimine, the number-average molecular weight in one embodiment is not less than 350, or not less than 600, not less than 1200 or not less than 1800.

In one embodiment when E is the hydrocarbyl-substituted acylating agent, the number average molecular weight of the polyimine may be in range of 300 to 30,000 or 500 to 15,000. Examples of suitable number average molecular weights for the polyimine include 350 to 12,000 or 600 and 10,000.

When Z is a polyamine or mixtures thereof, suitable materials include a polyamine with 2 to 30 carbon atoms. The polyamine may include alkylenediamines, N-alkyl alkylenediamines, and polyalkylenepolyamines. Useful polyamines include ethylenediamine, 1,2-diaminopropane, N-methyl-ethylenediamine, N-tallow($C_{16}$-$C_{18}$)-1,3-propylenediamine, N-oleyl-1,3-propylenediamine, polyethylenepolyamines (such as diethylenetriamine and triethylenetetramine, tetraethylenepentamine and "polyamine bottoms" (or "alkylenepolyamine bottoms")). In one embodiment the polyamine comprises polyalkylenepolyamines.

In general, alkylenepolyamine bottoms may be characterised as having less than two, usually less than 1% (by weight) material boiling below about 200°C. A typical sample of such ethylene polyamine bottoms obtained from the Dow Chemical Company of Freeport, Texas designated "E-100" has a specific gravity at 15.6°C of 1.0168, a percent nitrogen by weight of 33.15 and a viscosity at 40°C of 121 centistokes. Gas chromatography analysis reveals that such a sample contains about 0.93% "Light Ends" (most probably diethylene triamine (DETA), 0.72% triethylene tetramine (TETA), 21.74% tetraethylene pentamine and 76.61% pentaethylenehexamine and higher (by weight). These alkylenepolyamine bottoms include cyclic condensation products such as piperazine and higher analogs of diethylenetriamine or triethylenetetramine.

Polymerisation Terminating Group

T is hydrogen or a polymerisation terminating group that may be attached to either -(O-A-CO)$_n$- or -(O-B-CO)$_m$-. When T is a polymerisation terminating group it may include the residue of a carboxylic acid R-COOH or an alcohol R-OH, where R is a hydrocarbyl group which is optionally substituted containing 1 to 50, carbon atoms. In other embodiments R contains at least 8, or at least 12, or at least 14 carbon atoms. The upper range of carbon atoms present in R may be 30, or 25 or 20. Examples of suitable ranges for the number of carbon atoms present in R include 12 to 30 or 14 to 25.

When T is a polymerisation terminating group, it may be a residue of a carboxylic acid of formula T-COOH, wherein T may be aromatic, heterocyclic, alicyclic or aliphatic.

(O-A-CO)

In one embodiment, the residue (O-A-CO) may be derivable from an unsaturated fatty acid. Examples of unsaturated fatty acids include undecylenic acid, myristoleic acid, palmitoleic acid, oleic acid, gadoleic acid, elaidic acid, cis-eicosenoic acid, erucic acid, nervonic acid, 2,4-hexadienoic acid, linoleic acid, 16-hydroxy icosanic acid 11,14-eicosadienoic acid, linolenic acid, cis-8,11,14-eicosatrienoic acid, arachidonic acid, cis-5,8,11,14,17-eicosapentenoic acid, cis-4,7,10,13,16,19-docosahexenoic acid, all-trans-retinoic acid, ricinoleic acid lauroleic acid, eleostearic acid, licanic acid, citronelic acid, nervonic acid, abietic acid, or abscisic acid. In one embodiment (O-A-CO) is the residue of ricinoleic acid.

(O-B-CO)

The residue of (O-B-CO) may be derivable from a saturated hydroxy substituted fatty acid. Examples of saturated fatty acids include as hydroxycarboxylic acids including 12-hydroxydodecanoic acid, 5-hydroxydecanoic acid, 4-hydroxydodecanoic acid or 12-hydroxystearic acid.

In one embodiment A and B as defined in the residue of formula ((T-(O-A-CO)$_n$ (O-B-CO)$_m$))- may comprise saturated or unsaturated groups containing less than 8 carbon atoms, provided that the final product is soluble in the hydrocarbon fluid.

Hydrocarbon Fluid

In different embodiments the hydrocarbon fluid is a liquid fuel, an oil of lubricating viscosity or an unrefined or partially refined heterogeneous fluid as described below. The hydrocarbon fluid of the invention typically has a sulphur content of 0.5 wt % or less or 0.3 wt % or less, or less than 0.1 wt %. The sulphur content may be as low as 1 ppm or 5 ppm. An example of a suitable range for sulphur content includes 1 ppm to 0.1 wt %. Some fluids may have up to 2% or 3% sulphur.

The dispersant above-described may used in an oil of lubricating viscosity or a liquid fuel to provide a lubricant or an additised liquid fuel. The hydrocarbon fluid may also be present in an amount sufficient for the composition to be an additive concentrate.

Liquid Fuel

The fuel composition of the present invention optionally comprises a liquid fuel and is useful in fueling an internal combustion engine. The liquid fuel is normally a liquid at ambient conditions. The liquid fuel may be a hydrocarbon fuel, a nonhydrocarbon fuel, or a mixture thereof. The hydrocarbon fuel may be a petroleum distillate to include a gasoline as defined by ASTM specification D4814 or a diesel fuel as defined by ASTM specification D975. In an embodiment of the invention the liquid fuel is a gasoline, and in other embodiments the liquid fuel is a leaded gasoline, or a nonleaded gasoline. In another embodiment of this invention the liquid fuel is a diesel fuel. The hydrocarbon fuel may be a hydrocarbon prepared by a gas to liquid process to include for example hydrocarbons prepared by a process such as the Fischer-Tropsch process. The nonhydrocarbon fuel may be an oxygen containing composition, often referred to as an oxygenate, to include an alcohol, an ether, a ketone, an ester of a carboxylic acid, a nitroalkane, or a mixture thereof. The nonhydrocarbon fuel may include, for example, methanol, ethanol, methyl t-butyl ether, methyl ethyl ketone, transesterified oils and/or fats from plants and animals such as rapeseed methyl ester and soybean methyl ester, and nitromethane. Mixtures of hydrocarbon and nonhydrocarbon fuels may include, for example, gasoline and methanol and/or ethanol, diesel fuel and ethanol, and diesel fuel and a transesterified plant oil such as rapeseed methyl ester. In an embodiment of the invention, the liquid fuel is a hydrocarbon fuel, a nonhydrocarbon fuel, or a mixture thereof.
In several embodiments of this invention the liquid fuel may have a sulphur content on a weight basis that is 5000 ppm or less, 1000 ppm or less, 300 ppm or less, 200 ppm or less, 30 ppm or less, or 10 ppm or less.
Typically a liquid fuel contains less than 650 ppm of phosphorus and often less than 50 ppm or even 0 ppm.
When the invention is in the form of a fuel composition, the composition in one embodiment excludes a water-in-oil or oil-in-water emulsion.
When in the invention is in the form of a liquid fuel, the amount of liquid fuel present in the composition is generally greater than 50 wt %, and in other embodiments is present at greater than 90 wt %, greater than 95 wt %, greater than 99.5 wt %, or greater than 99.8 wt % of the composition.

Oil of Lubricating Viscosity

In one embodiment the hydrocarbon fluid is an oil of lubricating viscosity. Oils of lubricating viscosity may be derived from a variety of sources, and include natural and synthetic lubricating oils and mixtures thereof. The source of the oil or process for preparing the oil is generally not of particular importance unless that source or process provides some particular benefit, provided that the oil falls within one or more of the descriptions, below.
The natural oils useful in making the inventive lubricants and functional fluids include animal oils and vegetable oils (e.g., lard oil, castor oil) as well as mineral lubricating oils such as liquid petroleum oils and solvent - treated or acid-treated mineral lubricating oils of the paraffinic, naphthenic or mixed paraffinic/naphthenic types which may be further refined by hydrocracking and hydrofinishing processes and are dewaxed. Oils of lubricating viscosity derived from coal or shale are also useful. In several embodiments useful base oils may be those designated by the American Petroleum Institute (API) as Group I, II, III, IV or V oils. In several embodiments useful base oils may be those designated by the American Petroleum Institute (API) as Group II, III, IV or V oils. Group I oils contain < 90% saturates and/or > 0.03% sulfur and have a viscosity index (VI) of $\geq$ 80. Group II oils contain $\geq$ 90% saturates, $\leq$ 0.03% sulfur, and have a VI $\geq$ 80. Group III oils are similar to group II but have a VI $\geq$ 120.
Upon occasion, highly refined or hydrocracked natural oils have been referred to as "synthetic" oils. More commonly, however, synthetic lubricating oils are understood to include hydrocarbon oils and halo-substituted hydrocarbon oils such as polymerised and interpolymerised olefins (e.g., polybutylenes, polypropylenes, propylene-isobutylene copolymers, chlorinated polybutylenes); poly(1-hexenes), poly(1-octenes), poly(1-decenes), and mixtures thereof; alkyl-benzenes (e.g., dodecylbenzenes, tetradecylbenzenes, dinonylbenzenes, di-(2-ethylhexyl)-benzenes); polyphenyls (e.g., biphenyls, terphenyls, alkylated polyphenyls); alkylated diphenyl ethers and alkylated diphenyl sulfides and the derivatives, analogs and homologs thereof and the like. Polyalphaolefin oils are also referred to as API Group IV oils. (API Group V oils are "all others.")
In one embodiment, the oil of lubricating viscosity is a poly-alphaolefin (PAO). Typically, the poly-alpha-olefins (PAOs) are derived from monomers having from 4 to 30, or from 4 to 20, or from 6 to 16 carbon atoms. Examples of useful PAOs include those derived from 1-decene. These PAOs may have a viscosity from 2 to 150 or 2 to 50 mm/s (or cSt).
Suitable base oils include poly-$\alpha$-olefins such as oligomers of 1-decene. These synthetic base oils are typically hydrogenated, resulting in an oil of stability against oxidation. The synthetic oils may encompass a single viscosity range or a mixture of high viscosity and low viscosity range oils so long as the mixture results in a viscosity which is consistent with the requirements set forth below. Also included as preferred base oils are highly hydrocracked and dewaxed oils. These petroleum oils are generally refined to give enhanced low temperature viscosity and antioxidation performance. Mixtures of synthetic oils with refined mineral oils may also be employed.

Another class of oils is known as traction oils, which are typically synthetic fluids containing a large fraction of highly branched or cycloaliphatic structures, i.e., cyclohexyl rings. Traction oils or traction fluids are described in detail, for example, in U.S. Patents 3,411,369 and 4,704,490.

Other suitable oils may be oils derived from a Fischer-Tropsch process and hydrogenation.

When used as a lubricant, the amount of the above-described dispersant is typically 0.1 to 90, or to 20, or to 10, percent by weight of the composition, the balance being the oil of lubricating viscosity and any other components or additives desired for the application at hand. This broad range encompasses both fully formulated lubricant and concentrates. When used as an additive concentrate, (designed to be added to a lubricant to prepare a fully formulated lubricant) the amount of the present reaction product may be 20 to 90 percent by weight or 40 to 80 percent by weight. When the invention is in the form of a lubricant, the composition has a total sulphur content below 0.5 wt %, or 0.3 wt % or less, or 1 ppm to 0.1 wt % or less.

The total phosphorus content of the composition may also be below 0.1 wt %, or 0.085 wt % or less, or 0.07 wt % or less, or 0.055 wt % or less, or 0.05 wt % or less of the composition. In several embodiments the phosphorus is present from 1 ppm or 10 ppm to 50 ppm or to 200 ppm or to 400 ppm.

The total sulphated ash content as determined by ASTM D-874 is typically below 1.5 wt %, or less than 1.1 wt %, or less than 1.0 wt %, or 0.8 wt % or less, or 0.5 % or less of the composition. In several embodiments the total sulphated ash content is from 0.1 wt % or 0.2 wt % to 0.6 wt % or to 0.7 wt %.

Heterogeneous Fluid

The dispersant above-described may used in an unrefined or partially refined heterogeneous fluid to impart asphaltene control. The unrefined or partially refined heterogeneous fluid may be crude, black oil or a non-volatile fraction from a distillation of a crude oil. The heterogeneous fluid may also be a heavy fuel such as a heavy distillate heating oil or marine/industrial fuel oil, including bunker fuel. The heterogeneous fluid may also be any petrochemical process oil which has a propensity to form asphaltenic and ultimately coke-like species at surfaces under high temperature conditions. In one embodiment the heterogeneous fluid is an oil field product, e.g., a whole well product or a multiphase mixture in or from a well bore or one at a well head after at least partial separation of gas and/or water, for instance, an oil export fraction. In one embodiment the heterogeneous fluid is a refinery or petrochemical process stream or a heavy distillate or residual fuel.

The heterogeneous fluid may contain at least 0.01 wt % of asphaltene, in another embodiment up to a maximum of 30 wt % of asphaltene. Examples of suitable ranges of asphaltene present in the heterogeneous fluid include up to 90 wt %, or 0.001 wt % to 90 wt %, 0.01 wt % to 70 wt % or 0.04 to 50 wt % or 0.06 to 30 wt %. In one embodiment the asphaltene content is up to 90 wt %. Generally higher asphaltene content is present in oil shale, bitumen or asphalt.

The heterogeneous fluid may further comprise wax, often present from 0 wt % to 35 wt %, 0.5 wt % to 30 wt % or 1 wt % to 15 wt %; gas, present from 0 wt % to 10 wt % or water (or water droplets) from 0 wt % to 20 wt %. The heterogeneous fluid in one embodiment has multiple phases between the oil and gas and/or water.

In one embodiment the invention provides a method of asphaltene control in an unrefined or partially refined heterogeneous fluid, the method employing the dispersant of Formula (1), wherein E is defined as the hydrocarbyl-substituted acylating agent; and Z is the residue of a polyimine.

Other Performance Additives

The fuel or lubricant compositions optionally comprises one or more additional/other performance additives. The other performance additives include metal deactivators, detergents, dispersants other than component (b) above, viscosity modifiers, friction modifiers, dispersant viscosity modifiers, extreme pressure agents, antiwear agents, antioxidants, corrosion inhibitors, foam inhibitors, demulsifiers, pour point depressants, seal swelling agents, fuel lubricity improvers, and mixtures thereof.

The total combined amount of the additional performance additive compounds present on an actives basis (i.e. absence of normal amounts of additive diluent oil) ranges from 0 wt % to 25 wt % or 0.01 wt % to 20 wt % of the fuel or lubricant composition. Although one or more of the other performance additives may be present, it is common for the other performance additives to be present in different amounts relative to each other.

In one embodiment antiwear agents present include metal (especially zinc) dialkyldithiophosphates at less than 0.6 wt %, or less than 0.1 wt % or less than 0.01 wt % of the composition. The metal dialkyldithiophosphates may be present in ranges from 0 wt % to less than 0.6 wt %, or 0.001 wt % to less than 0.55 wt %.

In one embodiment a detergent is present. Suitable detergents include neutral or overbased, Newtonian or non-Newtonian, basic salts of alkali, alkaline earth and transition metals with one or more substrates selected from the group consisting of phenates, sulphurised phenates, sulphonates, carboxylic acids, phosphorus acids, mono- and/or di- thiophosphoric acids, saligenins, alkylsalicylates and salixarates.

The amount of detergent present may be from 0 wt % to 10 wt % or 0.5 to 6 wt %.

In one embodiment a dispersant other than component (b) above is present.

In one embodiment the composition is in a concentrate forming amount. If the present invention is in the form of a concentrate (which may be combined with additional oil to form, in whole or in part, a finished lubricant and/or liquid fuel), the ratio of the additive of the invention and/or other additional performance additives in an oil of lubricating viscosity and/or liquid fuel, to diluent oil is typically in the range of 80:20 to 10:90 by weight.

Antioxidants include molybdenum dithiocarbamates, sulphurised olefins, hindered phenols, and diphenylamines. Dispersants include N-substituted long chain alkenyl succinimides as well as posted treated version thereof. Post-treated dispersants include those by reaction with urea, thiourea, dimercaptothiadiazoles, carbon disulphide, aldehydes, ketones, carboxylic acids, hydrocarbon-substituted succinic anhydrides, nitriles, epoxides, boron compounds, and phosphorus compounds.

Antiwear agents include compounds such as metal thiophosphates, especially zinc dialkyldithiophosphates; phosphoric acid esters or salts thereof; phosphites; and phosphorus-containing carboxylic esters, ethers, and amides. Antiscuffing agents including organic sulphides and polysulphides, such as benzyldisulphide, bis-(chlorobenzyl) disulphide, dibutyl tetrasulphide, di-tertiary butyl polysulphide, di-tert-butylsulphide, sulphurised Diels-Alder adducts or alkyl sulphenyl N'N-dialkyl dithiocarbamates. Extreme Pressure (EP) agents include chlorinated wax; organic sulphides and polysulphides such as benzyldisulphide, bis-(chlorobenzyl) disulphide, dibutyl tetrasulphide, sulphurised methyl ester of oleic acid, sulphurised alkylphenol, sulphurised dipentene, sulphurised terpene, and sulphurised Diels-Alder adducts; phosphosulphurised hydrocarbons; metal thiocarbamates such as zinc dioctyldithiocarbamate; and barium heptylphenol diacid.

Friction modifiers include fatty amines, esters such as borated glycerol esters, partial esters of glycerol such as glycerol monooleate, fatty phosphites, fatty acid amides, fatty epoxides, borated fatty epoxides, alkoxylated fatty amines, borated alkoxylated fatty amines, metal salts of fatty acids, fatty imidazolines, condensation products of carboxylic acids and polyalkylene-polyamines, and amine salts of alkylphosphoric acids. Viscosity modifiers include hydrogenated copolymers of styrene-butadiene, ethylene-propylene polymers, polyisobutenes, hydrogenated styrene-isoprene polymers, hydrogenated isoprene polymers, polymethacrylate acid esters, polyacrylate acid esters, polyalkyl styrenes, alkenyl aryl conjugated diene copolymers, polyolefins, polyalkylmethacrylates and esters of maleic anhydride-styrene copolymers. Dispersant viscosity modifiers (often referred to as DVM) include functionalised polyolefins, for example, ethylene-propylene copolymers that have been functionalized with the reaction product of maleic anhydride and an amine, polymethacrylates functionalised with an amine, or esterified styrenemaleic anhydride copolymers reacted with an amine.

Corrosion inhibitors include octylamine octanoate, condensation products of dodecenyl succinic acid or anhydride and a fatty acid such as oleic acid with a polyamine. Metal deactivators include derivatives of benzotriazoles, 1,2,4-triazoles, benzimidazoles, 2-alkyldithiobenzimidazoles or 2-alkyldithiobenzothiazoles. Foam inhibitors include copolymers of ethyl acrylate and 2-ethylhexylacrylate and optionally vinyl acetate. Demulsifiers include polyethylene glycols, polyethylene oxides, polypropylene oxides and (ethylene oxide-propylene oxide) polymers; pour point depressants including esters of maleic anhydride-styrene, polymethacrylates, polyacrylates or polyacrylamides. Seal swell agents include Exxon Necton-37™ (FN 1380) and Exxon Mineral Seal Oil (FN 3200).

Process

The invention further provides a process for preparing a composition, comprising:

(1) mixing

(a) an aliphatic hydrocarbon solvent; and
(b) a hydrocarbyl-substituted acylating agent to form a mixture;

(2) reacting component (b) of the mixture with a polyimine to form a dispersant/detergent additive; and
(3) adding a hydrocarbon fluid to the mixture of step (1), to the reactants during step (2), to the dispersant/detergent additive formed in step (2), or a combination thereof.

In one embodiment the reaction temperature of step (2) is carried out at elevated temperatures, including 30 °C or above, or at least 50 °C or at least 100 °C. The reaction temperature may be in ranges from 70 °C to 220 °C or 120 °C to 200 °C or 140 °C to 190 °C.

Typically the aliphatic hydrocarbon solvent is substantially free of to free of sulphur and/or aromatic moieties. Typically the aliphatic hydrocarbon solvent has a boiling point of 150˚C or higher, or 175˚C or higher, or 200˚C or higher, or 225˚C or higher. Often the boiling point is 250˚C or 258˚C.

Often the aliphatic hydrocarbon solvent has a flash point of at least 90˚C, or at least 105˚C, or at least 120˚C, or 130˚C or higher. Often the aliphatic hydrocarbon solvent flash point is 145˚C or higher or 150˚C or higher. The flash point may be determined by the Pensky Closed Cup method as described in ASTM Test Method D93.

In one embodiment the aliphatic hydrocarbon solvent is an oil of lubricating viscosity, such as, an API Group I, II, III, IV or V base oil. In one embodiment the aliphatic hydrocarbon solvent is an oil of lubricating viscosity, such as, an API Group II, III, IV or V base oil. Examples of commercially available aliphatic hydrocarbon solvents Pilot™ 140 and Pilot™ 299 and Pilot™ 900 available from Petrochem Carless, Petro-Canada™ 100N, Nexbase™, Yubase™, and poly (alpha-olefins), such as, PAO-5, PAO-6, PAO-7 and PAO-8.

Industrial Application

When in the form of a lubricant the composition of the present invention is useful in an internal combustion engines, for example diesel fuelled engines, gasoline fuelled engines, natural gas fuelled engines or a mixed gasoline/ alcohol fuelled engines.

In one embodiment of the invention provides a method for lubricating an internal combustion engine, comprising supplying thereto a lubricant comprising the composition as described herein. The use of the composition of the invention is capable of imparting one or more of the group selected from improved engine cleanliness, improved seal compatibility, improved fuel economy, decreased $NO_x$ emissions and decreased particulate emissions.

When the invention is in the form of a lubricant, the amount of dispersant of Formula (1) present may range from 0.1 wt % to 20 wt %, or 0.5 wt % to 15 wt %, or 1 wt % to 10 wt %, or 1.5 wt % to 8 wt % of the composition.

When in the form of a liquid fuel, the invention is useful for imparting to a fuel composition at least one of improved fuel economy, a homogeneous air/fuel mix, nozzle cleanliness and injector cleanliness. In one embodiment the invention provides a method for fuelling an internal combustion engine, comprising supplying thereto a fuel comprising the composition of disclosed herein, wherein the hydrocarbon fluid is a liquid fuel.

When the invention is in the form of a liquid fuel, the dispersant defined by Formula (1) may be present in ranges from 0.01 wt % to 20 wt %, or 0.05 wt % to 15 wt %, or 0.1 wt % to 10 wt %, or 0.15 wt % to 8 wt % of the composition.

When in the form of a unrefined or partially refined heterogeneous fluid, the composition of the invention is useful the reduction and/or inhibition of asphaltene deposit formation and/or flocculation in an subterranean oil reservoir, oil pipe line or storage vessel or other relevant equipment that a hydrocarbon fluid, e.g., a crude oil, may come in contact with. The method and composition of the invention are also useful in the reduction and/or inhibition of deposit formation and settling in industrial and marine hydrocarbon fuel systems, including where fuel stream mixing may occur and give rise to asphaltenic destabilization, agglomeration and settling or deposition. The method and composition of the invention are also useful in the inhibition of deposition of asphaltenic species at surfaces in refinery and petrochemical processes.

In one embodiment the invention provides a method of asphaltene control in an unrefined or partially refined heterogeneous fluid, the method employing said dispersant of Formula (1).

For asphaltene control, the composition comprising a dispersant of Formula (I) may be present in an oil reservoir in an amount including 1 ppm to 30 wt % of the dispersant, in another embodiment 5 ppm to 10 wt % of the dispersant, in another embodiment 20 ppm to 3 wt % of the dispersant and in another embodiment 40 ppm to 1 wt % of the dispersant. For example the dispersant may be present from 60 ppm to 500 ppm or 80 ppm to 350 ppm.

.As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:

hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form a ring);

(i) substituted hydrocarbon substituents, that is, substituents containing non-hydrocarbon groups which, in the context of this invention, do not alter the predominantly hydrocarbon nature of the substituent (e.g., halo (especially chloro and fluoro), hydroxy, alkoxy, mercapto, alkylmercapto, nitro, nitroso, and sulfoxy);

(ii) hetero substituents, that is, substituents which, while having a predominantly hydrocarbon character, in the context of this invention, contain other than carbon in a ring or chain otherwise composed of carbon atoms. Heteroatoms include sulfur, oxygen, nitrogen, and encompass substituents as pyridyl, furyl, thienyl and imidazolyl. In general, no more than two, preferably no more than one, non-hydrocarbon substituent will be present for every ten carbon atoms in the hydrocarbyl group; typically, there will be no non-hydrocarbon substituents in the hydrocarbyl group.

It is known that some of the materials described above may interact in the final formulation, so that the components of the final formulation may be different from those that are initially added. The products formed thereby, including the products formed upon employing the composition of the present invention in its intended use, may not be susceptible of easy description. Nevertheless, all such modifications and reaction products are included within the scope of the present invention; the present invention encompasses the composition prepared by admixing the components described above.

Each of the documents referred to above is incorporated herein by reference. Except in the Examples, or where otherwise explicitly indicated, all numerical quantities in this description specifying amounts of materials, reaction conditions, molecular weights, number of carbon atoms, and the like, are to be understood as modified by the word "about." Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements.

The following examples provide an illustration of the invention. These examples are non exhaustive and are not intended to limit the scope of the invention.

EXAMPLES

Dispersants 1 to 43

Dispersants 1-14 (formation of PIBSA:PEI) are prepared by the following process. A flange flask is charged with polyisobutylene succinic anhydride and Pilot™900. The flask is equipped with a lid and clip. A nitrogen inlet is added and a stirrer with stirrer guide. A 250ml pressure equalising funnel with dog leg adaptor is added. A nitrogen blanket is switched on. The contents are stirred at ~200 rpm and the content warmed to 90 ˚C. polyethylyeneimine (PEI) is charged to a pressure equalising dropping funnel and added drop wise over 1 hour. After addition of the PEI the temperature is increased to 120 ˚C and the reaction vessel lagged with glass wool. The reaction temperature is held at 120 ˚C (or 175 ˚C as noted) for 4 hours. The reaction is then cooled to ambient temperature. Dispersant 1 has polyisobutylene with a number average molecular weight of about 1500 and a ratio of polyisobutylene to maleic anhydride of 1:2.24. Dispersants 2-10 have polyisobutylene with a number average molecular weight of 950-1000; Dispersants 11-14 have polyisobutylene with a number average molecular weight of 2300; and a ratio of polyisobutylene to maleic anhydride of 1:1.2. Other characteristics of Dispersants 1 to 14 are summarised in Table 1.

Table 1

| Example | PEI Mn | C=O:N | Reaction Temperature (˚C) | % of Pilot™ 900 Oil | TBN |
|---|---|---|---|---|---|
| Dispersant 1 | 600 | 1:4.71 | 120 | 28 | 219 |
| Dispersant 2 | 600 | 1:3.45 | 120 | 40 | 205 |
| Dispersant 3 | 600 | 1:3.45 | 175 | 40 | 100 |
| Dispersant 4 | 600 | 1:1.79 | 120 | 40 | 48 |
| Dispersant 5 | 600 | 1:1.79 | 175 | 40 | 33 |
| Dispersant 6 | 600 | 1:2.5 | 120 | 40 | 77 |
| Dispersant 7 | 400 | 1:1.79 | 120 | 40 | 54 |
| Dispersant 8 | 400 | 1:2.5 | 120 | 40 | 82 |
| Dispersant 9 | 400 | 1:3.45 | 120 | 40 | 145 |
| Dispersant 10 | 10,000 | 1:1.79 | 120 | 40 | 54 |
| Dispersant 11 | 600 | 0.85:1 | 120 | 40 | 12.5 |
| Dispersant 12 | 10,000 | 0.85:1 | 120 | 40 | 8.7 |
| Dispersant 13 | 600 | 1.6:1 | 120 | 40 | 20.6 |
| Dispersant 14 | 10,000 | 1.6:1 | 120 | 40 | 23.1 |

Dispersant 15 is prepared in a similar process to Dispersant 1, except 200g of polyricinoleic acid is used instead of polyisobutylene succinic anhydride; and polyethyleneimine is replaced with 57g of a polyamine, specifically HPA-X™. Further the reaction temperature is held at 140 ˚C for 5 hours before cooling to ambient. The resultant product has a C=O:N ratio of 1:3.5.

Dispersants 16 to 27 are prepared as described in Examples 1 to 12 respectively of WO 02/077111.

Dispersant 28 is prepared by the same methodology as Example 1 of WO 00/024503, except the polyricinoleic acid is replaced by polyhydroxystearic acid with weight average molecular weight of 1600 (derived from 12-hydroxystearic acid); and polyethyleneimine has a molecular weight of 600. The product formed has a C=O:N ratio of 1:3.5.

Dispersants 29 to 37 are prepared as described in Examples 1 to 12 respectively of WO 00/024503.

Dispersants 38 to 41 are prepared in a similar process to Dispersant 1, except polyhydroxystearic acid is used instead of polyisobutylene succinic anhydride and the amine used is shown in Table 2. Dispersants 38 to 41 are characterised as shown in Table 2.

Table 2

| Example | Amine | CO:N ratio | Nitrogen content (wt %) | TBN |
|---|---|---|---|---|
| Dispersant 38 | TETA | 1:1.3 | 0.66 | 20.0 |
| Dispersant 39 | TETA | 1:2.6 | 1.58 | 9.2 |
| Dispersant 40 | HPAX™ | 1:1.3 | 0.67 | 22.3 |
| Dispersant 41 | HPAX™ | 1:2.6 | 1.40 | 6.9 |
| Footnote to Table 2: TETA is Tetraethylene triamine. | | | | |

Dispersants 42 and 43 are prepared by the same methodology as Dispersant 24, except the dispersant products formed have a C=O:N ratio of 1:1.3 and 1:2.6 respectively.

Test 1: Deposit Control

A soot (or deposit)-dispersive screen test is performed on several of the dispersants prepared above. In this test, a specified amount (e.g., 0.2 wt % or 1 wt %) of the candidate chemistry is added to a used oil sample from the end of a test drain from a Mack™ T-11 engine test that exhibited a relatively high degree of viscosity increase. The sample is subjected to oscillation and the ability of the candidate to reduce the buildup of associations between molecules of soot is measured as a modulus, by a method described in Society of Automotive Engineers (SAE) Technical Paper 2001-01-1967, "Understanding Soot Mediated Oil Thickening: Rotational Rheology Techniques to Determine Viscosity and Soot Structure in Peugot XUD-11 BTE Drain Oils," M. Parry, H. George, and J. Edgar, presented at International Spring Fuels & Lubricants Meeting & Exhibition, Orlando, Florida, May 7-9, 2001. The calculated parameter is referred to as G'. The G' of the sample treated with the experimental chemistry is compared to the G' of the drain oil without the additive, the latter of which is defined as 1.00. Values of G' less than 1.00 indicate increasing effectiveness at soot dispersion. The results obtained are:

Table 3

| Example (Treat Rate 1 wt %) | $G'_{add}/G'_{oil}$ | Example (Treat Rate 1 wt %) | $G'_{add}/G'_{oil}$ |
|---|---|---|---|
| Comparative Example 1* | 1 | Dispersant 10 | 0.78 |
| Comparative Example 2** | 0.56 | Dispersant 11 | 0.64 |
| Dispersant 1 | 0.37 | Dispersant 12 | 0.92 |
| Dispersant 2 | 0.23 | Dispersant 13 | 0.06 |
| Dispersant 3 | 0.36 | Dispersant 14 | 0.23 |
| Dispersant 4 | 0.58 | Dispersant 38 | 0.48 |
| Dispersant 5 | 0.57 | Dispersant 39 | 0.14 |
| Dispersant 6 | 0.52 | Dispersant 40 | 0.35 |
| Dispersant 7 | 0.71 | Dispersant 41 | 0.09 |
| Dispersant 8 | 0.56 | Dispersant 42 | 0.37 |

(continued)

| Example (Treat Rate 1 wt %) | G'$_{add}$/G'$_{oil}$ | Example (Treat Rate 1 wt %) | G'$_{add}$/G'$_{oil}$ |
|---|---|---|---|
| Dispersant 9 | 0.40 | Dispersant 43 | 0.16 |
| Footnote to Table 3: * indicates that Comparative Example 1 is a base oil without a dispersant/detergent additive; and ** indicates Comparative Example 2 is polyisobutylene succinimide (derived from tetraethylene pentamine). | | | |

Table 4

| Example (Treat Rate 0.2 wt %) | G'$_{add}$/G'$_{oil}$ |
|---|---|
| Comparative Example 3*** | 0.56 |
| Dispersant 15 | 0.52 |
| Dispersant 28 | 0.29 |
| Footnote to Table 4: *** indicates that Comparative Example 3 is same as Comparative Example 2, except the treat rate is 0.2 wt %. | |

Test 2: Sludge Handling

A number of dispersants prepared above are dissolved in a tube at 6 different concentrations ranging from 0.125 wt % to 0.004 wt % in Exxon 100 N base oil forming a mixture (of 10 cm$^3$). Each mixture is then added to an artificial sludge solution and allowed to stand for one day. The tubes are examined to determine the amount of sludge deposited and the tube rating. The tube rating results reported are rated on a scale from 1 to 6. Typically better results are obtained for a sample with a higher tube rating and for samples with ability to suspend higher amounts of deposit. The results obtained for a number of dispersants prepared above are shown in Table 5.

Table 5

| Example (Treat Rate 0.2 wt %) | Tube Rating | Deposits Suspended (mg) |
|---|---|---|
| Dispersant 11 | 7* | 350 |
| Dispersant 13 | 7* | 500 |
| Dispersant 14 | 7* | 500 |
| Dispersant 38 | 5 | 63 |
| Dispersant 39 | 5 | 63 |
| Dispersant 40 | 3 | 32 |
| Dispersant 41 | 4 | 32 |
| Dispersant 42 | 3 | 32 |
| Dispersant 43 | 4 | 65 |
| Footnote to Table 5: * indicates that the samples performed sufficiently that a 7$^{th}$ tube is tested. | | |

Test 3: Seal Compatibility

Seal compatibility tests are designed to evaluate the effect of motor oils on Parker-Pradifa™ FKM E-281 seal elastomers (fluoroelastomer). Six dumbbells of elastomer are suspended using a micro wire and glass separators are covered by at least 10 ml of oil. The test vessel is covered with aluminium foil and stored at 150°C for 96 hours. The elastomer is removed from the oil and tested for percentage change in tensile strength (T/S), rupture elongation (R/E), and cracking (by bending). The results obtained samples are presented in Table 6.

Table 6

| Example | T/S Final (N/m$^2$) | R/E Final (%) |
|---|---|---|
| Dispersant 40 | 11.4 | 251 |
| Dispersant 41 | 9.5 | 212 |

Overall the results indicate the composition and dispersants of the invention are suitable for providing dispersant properties, providing improved fuel economy and/or seal compatibility.

**Claims**

1. A composition comprising:

   (a) a hydrocarbon fluid; and
   (b) a dispersant/detergent comprising the structure of Formula (1):

$$(E)_p\text{-}Z$$

Formula (1)

   wherein
   Z is a residue of a polyamine or polyimine;
   E is (i) a residue of a polyester having a free carboxylic acid group, or
   (ii) a residue of a hydrocarbyl-substituted acylating agent,
   with the proviso that if E is the residue of the hydrocarbyl-substituted acylating agent, Z is a polyimine and the composition has a phosphorus content of 0 ppm to 650 ppm; and
   p is at least 1.

2. The composition of claim 1, wherein the residue of a polyester having a free carboxylic acid group comprises a residue of formula ((T-(O-A-CO)$_n$ (O-B-CO)$_m$))-,
   wherein
   T is H or a polymerisation terminating group;
   A is C2-C40 alkenylene;
   B is C2-C40 alkylene;
   n is 0 to 50;
   m is 0 to 50, provided the sum of m+n is 1 or more; and
   p is at least 1.

3. The composition of claim 2, wherein the sum of m+n is less than 15.

4. The composition of claim 2, wherein A (the alkenylene) contains 8-30 carbon atoms; and wherein B (the alkylene) contains 8-30 carbon atoms.

5. The composition of claim 1, wherein the hydrocarbyl-substituted acylating agent comprises a polyisobutylene succinic anhydride.

6. The composition of claim 1, wherein the polyimine is a poly (C$_{2\text{-}6}$-alkyleneimine).

7. The composition of claim 1, wherein the polyimine has a number-average molecular weight of not less than 350.

8. The composition of claim 1, wherein the polyamine comprises polyalkylenepolyamines.

9. The composition of claim 2, wherein the dispersant of Formula (1) has E defined as the residue of formula ((T-(O-A-CO)$_n$ (O-B-CO)$_m$))-; and Z is the residue of a polyamine.

10. The composition of claim 2, wherein the dispersant of Formula (1) has E defined as the residue of formula ((T-(O-A-CO)$_n$ (O-B-CO)$_m$))-; and Z is the residue of a polyimine.

11. The composition of claim 2, wherein E is the residue of formula ((T-(O-A-CO)$_n$ (O-B-CO)$_m$))- and the weight ratio of ((T-(O-A-CO)$_n$ (O-B-CO)$_m$))- to Z is 8:1 to 30:1.

12. The composition of any of the preceeding claims, wherein the hydrocarbon fluid is a liquid fuel, an oil of lubricating viscosity or an unrefined or partially refined heterogeneous fluid.

13. The composition of any of the preceeding claims 1, wherein the hydrocarbon fluid is an oil of lubricating viscosity; and wherein the dispersant of Formula (1) has E defined as the hydrocarbyl-substituted acylating agent; and Z is the residue of a polyimine.

14. The composition of any of the preceeding claims, preferably of claim 13, wherein the composition has a phosphorus content of 0 ppm to 650 ppm; and a sulphur content of 0.5 wt % or less.

15. The composition of any of the preceeding claims, preferably of claim 13, further comprising a metal dialkyldithiophosphate present at less than 0.6 wt %.

16. The composition of any of the preceeding claims, preferably of claim 13, wherein the composition has a total sulphated ash content of less than 1.0 wt %; a sulphur content of 1 ppm to 0.1 wt % or less; and a phosphorus content of 0 ppm to 650 ppm.

17. A method for lubricating an internal combustion engine, comprising supplying thereto a lubricant comprising the composition of any of claims 1 to 16, wherein the hydrocarbon fluid is an oil of lubricating viscosity.

18. A method for fuelling an internal combustion engine, comprising supplying thereto a fuel comprising the composition of any of claims 1 to 16, wherein the hydrocarbon fluid is a liquid fuel.

19. A method of asphaltene control in an unrefined or partially refined heterogeneous fluid, the method employing a dispersant/detergent of Formula (1)

$$(E)_p\text{-}Z$$

Formula (1)

wherein
Z is a residue of a polyamine or polyimine;
E is (i) a residue of a polyester having a free carboxylic acid group, or
(ii) a residue of a hydrocarbyl-substituted acylating agent,
with the proviso that if E is the residue of the hydrocarbyl-substituted acylating agent, Z is a polyimine; and p is at least 1.

20. The use of the dispersant of Formula (1) in a hydrocarbon fluid as an additive capable of imparting at least one of detergent/dispersant activity, fuel economy activity and seal compatibility.

**European Patent Office**

## EUROPEAN SEARCH REPORT

Application Number

EP 06 11 8211

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | GB 1 506 786 A (SHELL INT RESEARCH) 12 April 1978 (1978-04-12) * page 1, lines 42-49 * * page 2, line 4957; examples * ----- | 1,5-7, 12-20 | INV. C10M133/56 C10M149/14 C10L1/22 C10L10/18 |
| X | US 6 458 173 B1 (LIN JIAN [GB]) 1 October 2002 (2002-10-01)  * column 1, lines 5-10; examples * ----- | 1-4,8,9, 11,12, 14,16, 18,20 | ADD. C10N30/04 C10N40/25 |
| P,X | WO 2006/054045 A (ICI PLC [GB]; OLDFIELD ANDREW SIMON [GB]; IRVINE DEREK JOHN [GB]) 26 May 2006 (2006-05-26)  * page 4, line 21 - page 6, line 26; examples 1-3 * ----- | 1-4,8,9, 11,12, 15,17, 18,20 | |
| P,X | WO 2006/047745 A (LUBRIZOL CORP [US]; WILKES MARK F [GB]; DAVIES MARK C [GB]) 4 May 2006 (2006-05-04) * paragraphs [0010], [0011], [0015], [0018]; examples * ----- | 1-4,6,7, 10-12, 19,20 | TECHNICAL FIELDS SEARCHED (IPC) C10M C10L |
| X | GB 2 001 083 A (ICI LTD) 24 January 1979 (1979-01-24) * page 1, lines 5,6; examples H,I,J,K,32 * ----- | 1-4,6,7, 10,12,20 | |
| X | WO 00/24503 A (AVECIA LTD [GB]; THETFORD DEAN [GB]) 4 May 2000 (2000-05-04) * page 1, lines 1-20; examples 10-21 * ----- | 1-4,6,7, 10,11,20 | |

The present search report has been drawn up for all claims

| Place of search | Date of completion of the search | Examiner |
|---|---|---|
| Munich | 29 November 2006 | Kazemi, Pirjo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 752 516 A1**

## ANNEX TO THE EUROPEAN SEARCH REPORT
## ON EUROPEAN PATENT APPLICATION NO.

EP 06 11 8211

29-11-2006

| Patent document cited in search report | | Publication date | Patent family member(s) | | Publication date |
|---|---|---|---|---|---|
| GB 1506786 | A | 12-04-1978 | BE 851615 A1 | | 18-08-1977 |
| | | | FR 2341358 A1 | | 16-09-1977 |
| | | | JP 1378198 C | | 08-05-1987 |
| | | | JP 52102892 A | | 29-08-1977 |
| | | | JP 61046174 B | | 13-10-1986 |
| US 6458173 | B1 | 01-10-2002 | AU 1973900 A | | 26-06-2000 |
| | | | WO 0034418 A1 | | 15-06-2000 |
| | | | JP 2002531684 T | | 24-09-2002 |
| WO 2006054045 | A | 26-05-2006 | NONE | | |
| WO 2006047745 | A | 04-05-2006 | NONE | | |
| GB 2001083 | A | 24-01-1979 | NONE | | |
| WO 0024503 | A | 04-05-2000 | AU 5638999 A | | 15-05-2000 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9812282 A1
- US 5279626 A
- US 3658494 A
- US 6408812 B
- WO 04090080 A
- GB 1506786 A
- US 4938885 A
- US 6228978 B
- US 3411369 A
- US 4704490 A
- WO 02077111 A
- WO 00024503 A

**Non-patent literature cited in the description**

- **TAKEO SAEGUSA et al.** *Macromolecules,* 1972, vol. 5, 4470